# EUROPÄISCHE PATENTSCHRIFT

(11) **EP 1 279 479 B1**
(45) Veröffentlichungstag und Bekanntmachung des Hinweises auf die Patenterteilung: **17.08.2005**
(21) Anmeldenummer: 02013940.8
(22) Anmeldetag: 24.06.2002
(51) Int. Cl.: B29C 63/04

(54) **Vorrichtung zum Umbugen von Lochrändern in einem Formteil**
Device for folding over the edge of a hole in a moulded part
Dispositif pour replier les bords d'un trou dans une pièce moulée

(30) Priorität: 26.07.2001 DE 10136325
(43) Veröffentlichungstag der Anmeldung: 29.01.2003
(73) Patentinhaber: Frimo-Huber Systemtechnik GmbH & Co., 83395 Freilassing (DE)
(72) Erfinder: Kreuzberger, Paul, 83395 Freilassing (DE)
(74) Vertreter: Patentanwälte Dr. Solf & Zapf

(56) Entgegenhaltungen:
- FR-A- 1 504 703
- US-A- 5 715 652

## Beschreibung

Die Erfindung betrifft eine Vorrichtung zum Umbugen von Rändern an einem Formteil, insbesondere von Verkleidungsteilen mit Kaschiermaterial.

Das Aufbringen von Kaschiermaterial auf Verkleidungsteilen erfolgt am Außenrand des Formteils üblicherweise maschinell. Problematisch hingegen ist das Umbugen von Rändern im Formteil, insbesondere von kleinen Lochrändern. Zu diesem Zweck stehen bislang keine maschinellen Vorrichtungen zur Verfügung. FR-A-1504703 zeigt eine Vorrichtung nach dem Oberbegriff des Anspruches 1

Eine Aufgabe der Erfindung besteht darin, eine Vorrichtung zum Umbugen von Rändern, insbesondere von Lochrändern, in einem Formteil der eingangs genannten Art zu schaffen, das den bisherigen Aufwand beim Umbugen verringert und weitgehend manuelle Eingriffe unnötig macht.

Gelöst wird diese Aufgabe durch die Merkmale des Anspruchs 1. Vorteilhafte Weiterbildungen der Erfindung sind in den Unteransprüchen angegeben.

Durch die Erfindung wird demnach eine Vorrichtung zum Umbugen von Rändern, insbesondere Lochrändern, in einem Formteil mit Kaschiermaterial bereitgestellt, aufweisend:
einen Zylinder, dessen Innendurchmesser dem Durchmesser des umzubugenden Lochrands zuzüglich der Dicke des Kaschiermaterials entspricht, und der eine Stirnrandfläche zum Pressen des Kaschiermaterials an den sich an den Lochrand anschließenden Bereich des plattenförmigen Gegenstands aufweist,
einen Kolben, der im Zylinder mit einem Ende über dessen Stirnrandfläche hinaus beweglich geführt ist, das unter Festlegung eines axialen Übergangsbereichs einen Durchmesser aufweist, der kleiner als der Zylinder-Innendurchmesser ist,
einen O-Ring aus elastischem Material, der auf dem Kolben-Übergangsbereich sitzt und eine Dicke entsprechend der Differenz zwischen dem Durchmesser des Übergangsbereichs und dem Zylinder-Innendurchmesser aufweist, und
eine Rückhalteeinrichtung für den O-Ring zum axialen Festsetzen des O-Rings am Kolben-Übergangsbereich und zum axialen Pressen des O-Rings gegen den Übergangsbereich.

Mit anderen Worte basiert die erfindungsgemäße Vorrichtung auf einem elastischen Mittel, dessen Kontur der Kontur des umzubugenden Lochrands entspricht bzw. an diese anpassbar ist, und in welches mittels einer Kolben-/Zylinderanordnung zum Hindurchschieben des elastischen Mittels durch den mit Kaschiermaterial ausgekleideten Lochrand Verformungsenergie einleitbar ist, welche Verformungskraft nach Hindurchtritt des elastischen Mittels durch den Lochrand radial derart freisetzbar ist, dass dabei das vom Lochrand überstehende Kaschiermaterial radial auswärts umgelegt wird.

Die erfindungsgemäße Vorrichtung eignet sich nicht nur zum Umbugen kreisrunder Lochränder mit Kaschiermaterial, sondern auch zum Umbugen anderer runder Lochrandgeometrien, insbesondere von im wesentlichen elliptischen Lochrändern. Auch in diesem Fall dient das elastische Mittel zur Speicherung und Abgabe von Verformungsenergie bevorzugt in Gestalt eines O-Rings. Soweit vorliegend von O-Ring die Rede ist, ist hierunter jegliches elastische Mittel zu verstehen, dass sich in allgemeiner Ringform in erfindungsgemäßer Weise am Vorderende eines Kolbens anordnen und mit Hilfe der Zylinder-/Kolbenanordnung durch den Lochrand führen und zur Speicherung und Freigabe von Verformungsenergie verformen lässt.

Um das elastische Mittel, bzw. den O-Ring in der gewünschten Weise durch den mit Kaschiermaterial umzubugenden Lochrand führen zu können und mittels der Rückhalteeinrichtung elastische Verformungsenergie einleiten zu können, ist am Vorderende des Kolbens eine Rückhaltestelle bzw. ein Rückhaltebereich gebildet, der als axiales Widerlager für die Rückhalteeinrichtung dient. Diese Stelle ist vorliegend auch als Kolben-Übergangsbereich bezeichnet und dieser Bereich kann im einfachsten Fall als radiale Ringstufenfläche gebildet sein, die zusammen mit dem sich radial außen anschließenden Lochrand die Aufgabe zu übernehmen vermag, in den O-Ring Verformungsenergie einzuleiten, die später zum Umlegen des Kaschiermaterials hinter dem Lochrand freigegeben wird.

Bevorzugt jedoch ist der Kolben-Übergangsbereich konusförmig gebildet. Zu diesem Zweck ist vorgesehen, dass der Kolben über eine Konusmantelfläche in den kleineren Durchmesser an seinem Ende übergeht, und dass der O-Ring durch die Rückhalteeinrichtung an der Stelle axial am Kolben festgesetzt ist, an welcher die Konusmantelfläche in die Zylindermantelfläche kleineren Durchmessers übergeht. Diese Konusmantelfläche hat gegenüber der radialen Ringstufenfläche den Vorteil, dass der O-Ring nach Freigabe der im O-Ring gespeicherte Energie bei Vorschub des Kolbens relativ zur Rückhalteeinrichtung der O-Ring radial auswärts aufgeweitet wird, so dass das Kaschiermaterial auch hinter dem Lochrand radial über eine relativ große Strecke umgelegt wird, die Umgebung also sauber und faltenfrei auf die Rückseite des Formteils mit definierter Zugkraft angedrückt wird.

Um sicherzustellen, dass das Kaschiermaterial beim Umlegen auf die Rückseite des Lochrands innerhalb des Lochrands nicht zurückgeschoben wird, oder faltig wird, ist bei dem konusförmig ausgebildeten Vorderende des Kolbens vorgesehen, dass die Konusmantelfläche eine axiale Erstreckung derart aufweist, dass der sich einwärts anschließende Kolbenbereich mit dem Nenn-Innendurchmesser dann auf Höhe des Lochrands zu liegen kommt, wenn der O-Ring durch axialen Hub des Kolbens auf dem Lochrand austritt.

Die Rückhalteeinrichtung für das elastische Mittel bzw. den O-Ring kann in unterschiedlicher Weise gebildet sein, beispielsweise getrennt von der Kolben-/Zylinderanordnung. Gemäß einer besonders bevorzugten Ausführungsform ist die Rückhalteeinrichtung jedoch in die Kolben-/Zylinderanordnung integriert. Zu diesem Zweck umfasst die Rückhalteeinrichtung eine Betätigungsstange, die in einer axialen Bohrung des Kolben geführt ist. Bei dieser Ausbildung der Rückhalteeinrichtung als integraler Bestandteil der Kolben-/Zylinderanordnung ist die Rückhalteeinrichtung bevorzugt in Gestalt eines Bechers gebildet, in dessen Boden die Betätigungsstange verankert ist und dessen Rand im Eingriff mit dem O-Ring steht.

Eine vorteilhafte Weiterbildung der Erfindung sieht vor, dass eine Niederdrückeinrichtung für über den Lochrand vorstehendes Kaschiermaterial vorgesehen ist, die an diesem radial außerhalb des gegebenenfalls radial aufgeweiteten O-Rings angreift. Diese Niederdrückeinrichtung ist bevorzugt ein getrennt von der Kolben-/Zylinderanordnung gebildetes Mittel zum Fixieren des Außenrands des Kaschiermittels hinter dem Lochrand auf dem Formteil. Die Betätigung dieser Rückhalteeinrichtung erfolgt beispielsweise mit Hilfe einer zusätzlichen Kolben-/Zylinderanordnung, die koaxial zur Kolben-/Zylinderanordnung zur Betätigung des O-Rings angeordnet ist. In dem Fall, dass die Rückhalteeinrichtung als becherförmiger Bestandteil der Kolben-/Zylinderanordnung gebildet ist, ist auch die Niederdrückeinrichtung in Gestalt eines Bechers gebildet, der die becherförmige Rückhalteeinrichtung übergreift.

Ein Arbeitsverfahren zum Umbugen von Lochrändern in einem plattenförmigen Gegenstand mit einem Kaschiermaterial unter Verwendung der vorstehend erläuterten Umbugvorrichtung ist im Anspruch 9 angegeben. Dieses Verfahren, das sich durch seine einfache Ausführbarkeit und die Bereitstellung eines umgebugten Lochrands auszeichnet, ist durch folgende Schritte gekennzeichnet:
a) Bereitstellen der Anordnung aus Kolben, Zylinder, O-Ring und den O-Ring am Kolben-Übergangsbereich festsitzender Rückhalteeinrichtung, wobei der Kolben so weit in den Zylinder eingefahren wird, dass der O-Ring in diesem zu liegen kommt,
b) Anlegen der Stirnrandfläche des Zylinders an der mit Kaschiermaterial kaschierten Seite des umzubugenden Lochrands, über welchen das an dieser Stelle durchbrochene Kaschiermaterial vorsteht,
c) Ausfahren des Kolbens, bis die Unterseite des O-Rings auf Höhe des Zylinder-Stirnflächenrands zu liegen kommt,
d) Verschieben der Rückhalteeinrichtung entgegen der Kolbenausfahrrichtung unter axialer Verpressung des O-Rings, und
e) Ausfahren des Kolbens unter Entspannung des O-Rings in radialer Richtung unter Umlegen des Kaschiermaterials auf die Rückseite des Lochrands.

Der letztgenannte Schritt mit Ausfahren des Kolbens unter Entspannung des O-Rings in radialer Richtung sieht nach der Entspannung des O-Rings vor, die Rückhalteeinrichtung stationär zu halten, während der Kolben unter radialem Aufweiten des über die konische Mantelfläche ablaufenden O-Rings weiter ausgefahren wird. Diese bevorzugte Ausgestaltung des erfindungsgemäßen Verfahrens trägt zu einem sauberen Umbugen des Lochrands bei.

Unter Rückgriff auf die vorstehend genannte Niederdrückeinrichtung wird das Verfahren schließlich bevorzugt so geführt, dass der Außenrand des den Lochrand durchsetzenden und vom O-Ring umgelegten Kaschiermaterials zur Fixierung, z.B. Klebeverbindung mittels der Niederdrückeinrichtung auf die Rückseite des Lochrands gepresst wird. ,

Nachfolgend wird die Erfindung anhand der Zeichnung beispielhaft näher erläutert; in dieser zeigen:

Fig. 1 bis Fig. 6 im Längsschnitte eine Ausführungsform der erfindungsgemäßen Umbugvorrichtung unter Darstellung des zeitlichen Ablaufs des Umbugvorgangs beginnend mit Fig. 1 bis Fig. 6, wobei
Fig. 1 den Beginn des Umbugvorgangs mit entspanntem O-Ring zeigt,
Fig. 2 das Einleiten von Verformungsenergie in den O-Ring mittels der Rückhalteeinrichtung zeigt,
Fig. 3 den Beginn des Entspannungsvorgangs des O-Rings mit Abgabe der Verformungsenergie in radialer Richtung durch Aufweiten des O-Rings in radialer Richtung zeigt,
Fig. 4 die radiale Aufweitung des O-Rings mit Hilfe des konusförmigen Endes des Kolbens zeigt, um das Kaschiermaterial weiter radial auswärts umzulegen,
Fig. 5 den Einsatz der Niederdrückeinrichtung für den Außenrand des Kaschiermaterials zeigt,
während Fig. 6 das Rückziehen der Kolben-/Zylinderanordnung aus dem Lochrand bei mit Hilfe der Niederdrückeinrichtung gehaltenem Außenrand des Kaschiermaterials zeigt.

Ein Teil eines Formteils, beispielsweise eines Armaturenbretts im Bereich eines Durchbruchs ist mit der Bezugsziffer 10 bezeichnet. Der Lochrand eines Durchbruchs ist mit der Bezugsziffer 11 bezeichnet und dieser Lochrand 11 besitzt anschließend an die kaschierte Vorderseite des Formteils 10 zylindrische Gestalt, und ausgehend vom zylindrischen Teil zur Rückseite des Formteils 10 konische Gestalt, wobei der größte Durchmesser des konischen Randteils rückseitig außen liegt.

Das Formteil 10 ist auf seiner Vorderseite bzw. Sichtseite mit einem Kaschiermaterial 12 überzogen. Mittels der erfindungsgemäßen Vorrichtung soll auch der Lochrand 11 mit Kaschiermaterial ausgekleidet werden. Man spricht hier davon, dass der Lochrand 11 mit Kaschiermaterial umgebugt werden soll. Zum Umbugen dient die erfindungsgemäße Vorrichtung, mit deren Hilfe das in den Lochrand 11 vorstehende und diesen durchsetzende Kaschiermaterial auf die Rückseite des Formteils 10 umgelegt werden soll, ohne dass im Bereich des Lochrands dabei Falten entstehen, d.h. das Umbugen soll faltenfrei und frei von Knittern erfolgen.

Die Umbugvorrichtung umfasst eine Kolben-/Zylinderanordnung 13 mit einem Zylinder 14 und einen in diesem hin- und her beweglich geführten Kolben 15. Die Kolben-/Zylinderanordnung 13 dient zur Betätigung eines elastischen O-Rings 16, der zu diesem Zweck auf dem Vorderende des Kolbens 15 sitzt, das über einen offenen Rand des Zylinders 14 hinaus beweglich ist.

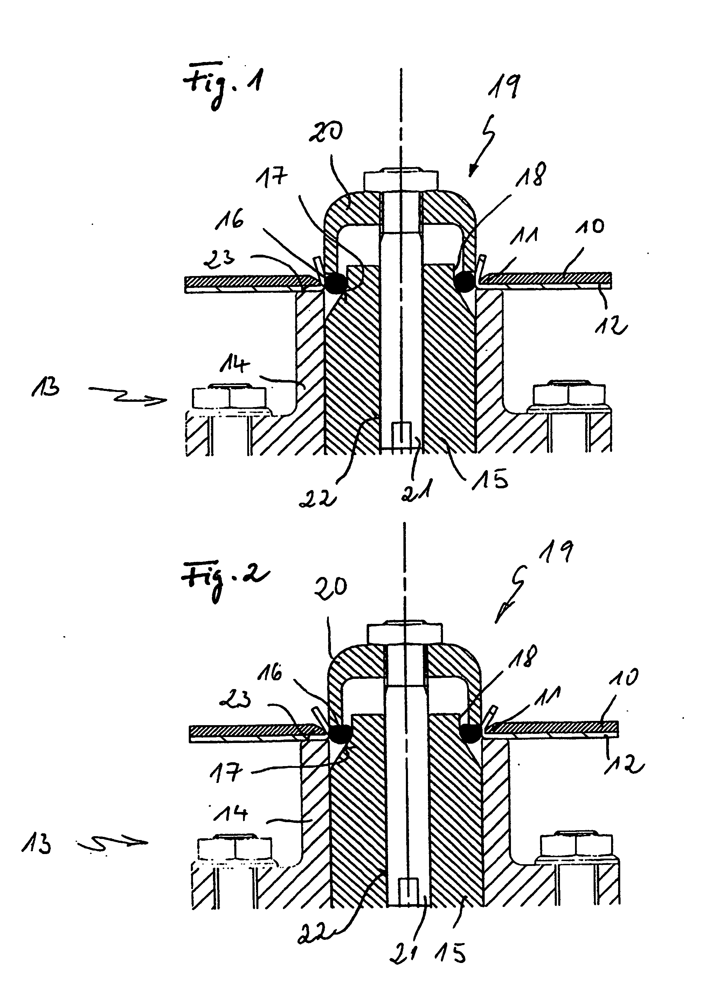

Zum Festlegen des O-Rings 16 ist der Kolben 15 an seinem Vorderende mit einem Übergangsbereich 17 zwischen dem Nennaußendurchmesser des Kolbens 15 und einem durchmesserverringerten zylindrischen Endabschnitt 18 versehen. Dieser Übergangsbereich, der grundsätzlich in Gestalt eine Stufe zwischen den beiden unterschiedlichen Durchmessern vorliegen kann, ist bei der in den Figuren gezeigten Ausführungsform des Kolbenvorderendes als Konusmantelfläche gebildet und der O-Ring sitzt im nichtbetätigten, d.h. im nicht verformten Zustand am Übergang der Konus-Mantelfläche zum zylindrischen Endabschnitt 18 kleinen Durchmessers, wie in Fig. 1 gezeigt. In dieser Stellung wird der O-Ring 16 durch eine Rückhalteeinrichtung 19 gehalten, die in Bezug auf den Kolben 15 axial verstellbar ist.

Im Einzelnen umfasst die Rückhalteeinrichtung 19 einen becherförmigen Körper 20, dessen Außendurchmesser dem Innendurchmesser des Zylinders 14, bzw. dem Außendurchmesser des in dem Zylinder 14 geführten Kolbens entspricht. Mit anderen Worten bildet die zylindrische Wandung des becherförmigen Körpers 20 eine axiale Fortsetzung des Kolbens 15, so dass der becherförmige Körper 20 beim Rückziehen des Kolbens 15 in den Zylinder 14 einzutreten vermag und entlang diesem geführt werden kann. Im Boden des becherförmigen Körpers 20 ist eine Betätigungsstange 21 verankert, die längsverschieblich in einer Längsmittenbohrung 22 des Kolbens 15 angeordnet ist.

Zum Halten des O-Rings 16 am oberen Ende des Übergangsbereichs 17 des Kolbens 15 nimmt der becherförmige Körper 20 der Rückhalteeinrichtung 19 die in Fig. 1 gezeigte Position ein, in welcher sie den O-Ring 16 an dieser Stelle in axialer Richtung festsetzt, ohne den O-Ring 16 zu belasten.

Wenn der Kolben 15 soweit in den Zylinder 14 rückgezogen ist, dass der becherförmige Körpers 20 zumindest mit seinem dem O-Ring 16 beaufschlagenden Rand im Zylinder 14 zu liegen kommt, wird der O-Ring 16 durch die Bohrung des Zylinders 14 radial geführt. Sobald der Kolben 15 in die in Fig. 1 gezeigte Position ausgefahren ist, übernimmt der Lochrand 11 die radiale Führung des O-Rings 16, bzw. das dort zu liegend kommende Kaschiermaterial 12.

Anhand von Fig. 1 bis 4 soll nunmehr das Umbugen des Lochrands 11 mit dem Kaschiermaterial 12 näher erläutert werden.

Das diesbezügliche Verfahren zum Umbugen des Lochrands sieht in einem der Darstellung von Fig. 1 vorausgehenden Bereitstellungszustand vor, die Stirnrandfläche 23 am Formteil 10 an der mit Kaschiermaterial 12 kaschierten Vorderseite des Lochrands 11 anzulegen. In diesem Zustand ist der Kolben 15 bevorzugt soweit in den Zylinder 14 rückgezogen, dass der O-Ring vollständig im Zylinder 14 zu liegen kommt, während der becherförmige Körper 20 der Rückhalteeinrichtung 19 über die Stirnrandfläche 23 des Zylinders 14 vorsteht. Beim Aufsetzen der Stirnrandfläche 23 positionsgerecht am Lochrand 11 wird der verrundete Übergang der Becherwandung in den Becherboden zur Führung der Kolben-/Zylinderanordnung ausgenützt. D.h., dieser verrundete Bereich fördert das in bezug auf den Lochrand 11 zentrierte Ansetzen des Zylinders 11 mit seiner Stirnrandfläche 23.

Fig. 1 zeigt denjenigen Schritt des Umbugverfahrens, bei welchem folgen auf das Ansetzen der Stirnrandfläche 23 des Zylinders 14 auf der Vorderseite des Lochrands 11 der Kolben 15 zusammen mit der Rückhalteeinrichtung soweit ausgefahren ist, dass der O-Ring 16 vollständig im Lochrand 11 zu liegen kommt, während der becherförmige Körper 20 über diesen Rand hinaus axial hinaussteht. Durch dieses Vorschieben des Kolbens 15 ist das ursprünglich in den Lochrand 11 im wesentlichen radial hineinstehende Kaschiermaterial 12 in die in Fig. 1 gezeigte über den Lochrand 11 axial vorstehende Position überführt.

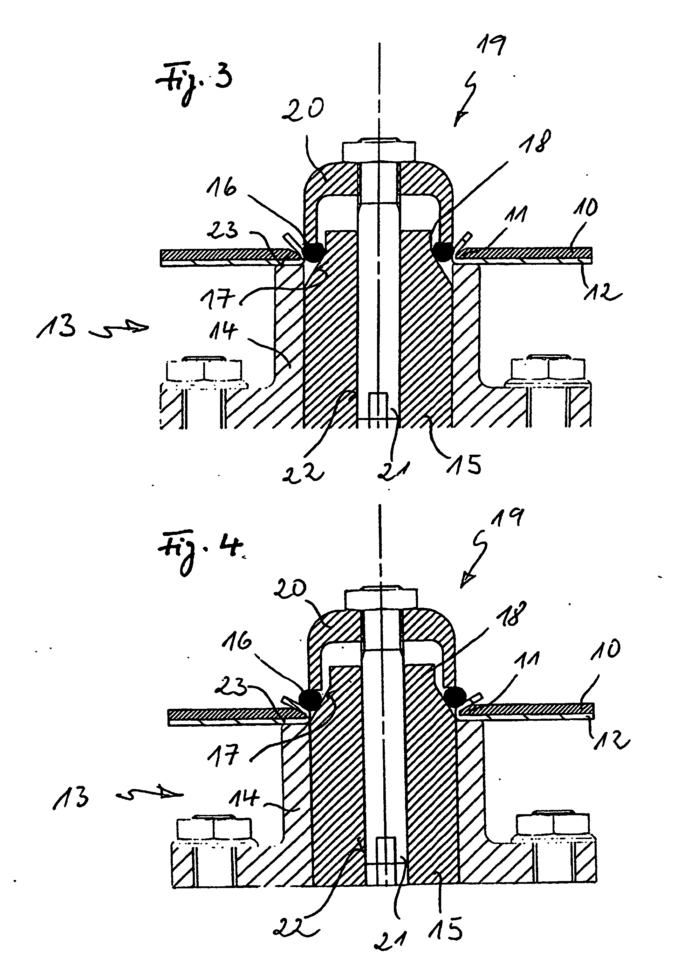

Daraufhin erfolgt ein axiales Verpressen des O-Rings 16, wie in Fig. 2 gezeigt, durch Rückziehen der Rückhalteinrichtung 19 entgegen der Kolbenvorschubrichtung mit Hilfe der Betätigungsstange 21 derart, dass der Becherrand des becherförmigen Körpers 20 der Rückhalteeinrichtung 19 den O-Ring 16 axial zusammendrückt. In radialer Richtung vermag der O-Ring 16 dieser mittels des becherförmigen Körpers 20 eingeleiteten elastischen Verformungsenergie nicht auszuweichen, so dass diese Kraft im O-Ring gespeichert ist.

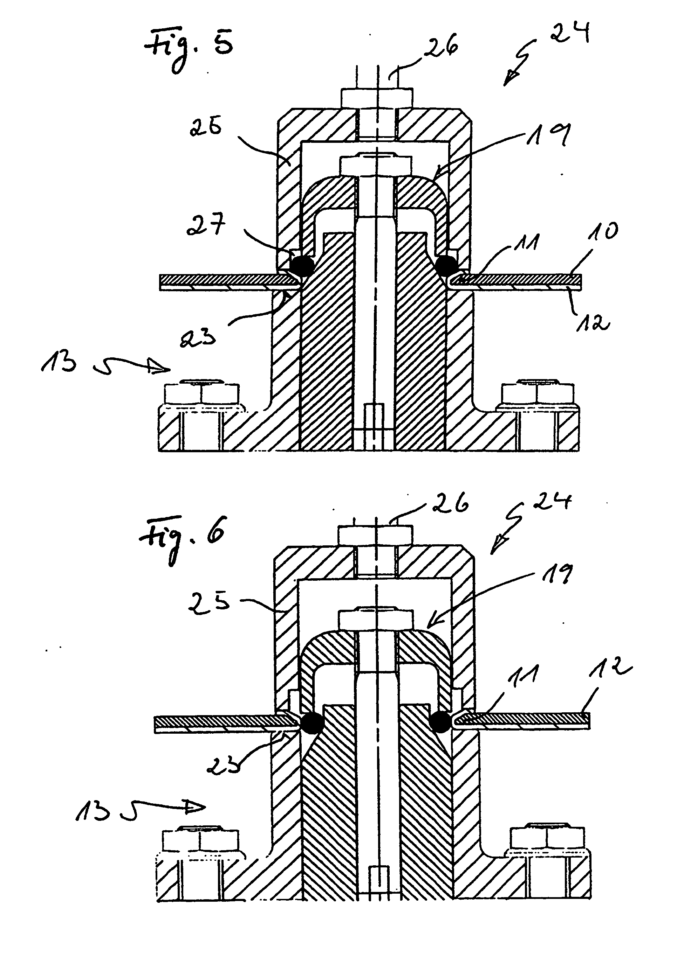

Fig. 3 zeigt den nächsten Schritt des erfindungsgemäßen Umbugverfahrens, demnach der Kolben 15 bei stationär in der Stellung von Fig. 2 gehaltener Rückhalteeinrichtung 19 weiter aus dem Zylinder 14 ausgefahren wird. Bei diesem Vorschub bzw. Hub des Kolbens 15 wird der O-Ring 16 in seiner ursprünglichen Stellung am Übergangsbereich 17 gehalten. Da der O-Ring 16 jedoch bei diesem Kolbenhub in den konisch erweiterten Bereich des Lochrands 11 gelangt, gibt er zunächst zumindest einen Teil der in ihm gespeicherten Verformungsenergie dadurch frei, dass er radial nach außen ausweicht. Diese radiale Entspannung des O-Rings 16 wird auf das durch den Lochrand 11 hindurchstehende Kaschiermaterial 12 übertragen und führt dazu, dass das Kaschiermaterial entlang den konisch erweiterten Teil des Lochrands 11 radial nach außen verdrängt wird. Dieses Verdrängen kann je nach vorausgehender Verfolgung des O-Rings 16 dazu ausreichen, dass das Kaschiermaterial 12 vollständig über das konisch erweiterte hintere Ende des Lochrands 11 umgelegt wird.

Fig. 4 zeigt eine zusätzliche Maßnahme, um sicherzustellen, dass das Kaschiermaterial 12 über den gesamten Lochrand 11 in axialer Richtung umgelegt wird. Zu diesem Zweck wird bei stationär gehaltenem becherförmigen Körper 20 der Kolben 15 axial weiter ausgefahren, wodurch, wie in Fig. 4 gezeigt, der im wesentliche entspannte O-Ring 16 (d.h., der unverformte O-Ring 16) die Konusmantelfläche axial hinuntergeschoben wird. Im Verlauf dieser axialen Verschiebung des O-Rings 16 wird dieser radial aufgeweitet und legt dadurch das Kaschiermaterial 12 in radialer Richtung weiter nach außen um.

Der in Fig. 4 noch überstehend gezeigte Außenrand des Kaschiermaterials 12 hinter dem Lochrand 11 kann nunmehr entweder bei in der gezeigten Stellung fixierten Kolben-/Zylinderanordnung nach außen umgelegt und dabei auf der Rückseite des Lochrands 11 am Formteil 10 festgeklebt werden oder dieser manuelle Vorgang kann durch den in Fig. 5 gezeigten maschinellen Vorgang ersetzt sein, wie im folgenden erläutert.

Fig. 5 und 6 zeigen zusätzlich zu der Kolben-/Zylinderanordnung 13 ein Niederdrückeinrichtung 24, die einen weiteren becherförmigen Körper 2 umfasst, der mittels eine Betätigungsstange 26 antreibbar ist. Die Betätigungsstange 26 verläuft koaxial zur Längsmittenachse des Kolbens 15 bzw. des becherförmigen Körpers 20 der Rückhalteeinrichtung 19 und ist im Boden des becherförmigen Körpers 25 verankert.

Der Rand des becherförmigen Körpers 25 dient zum Festpressen bzw. Verkleben des in Fig. 4 überstehend gezeigten Außenrands des Kaschiermaterials 12 auf der Rückseite des Formteils 10. Zu diesem Zweck wird der becherförmige Körper 25 auf die Rückseite des Formteils 10 abgesenkt. An seinem Rand ist der becherförmige Körper 25 mit einer stufenartigen ringförmigen Ausnehmung versehen, deren Durchmesser so gewählt ist, dass der O-Ring 16 beim Absenken des becherförmigen Körpers 25 auf die Rückseite des Formteils 10 durch den Becherrand nicht verformt wird.

Fig. 6 schließlich zeigt den Beginn des letzten Schritts des erfindungsgemäßen Umbugverfahrens demnach der Kolben 15 der Kolben-/Zylinderanordnung 13 in den Zylinder 14 rückgezogen wird. Bei diesem Vorgang bleibt die Niederdrückeinrichtung 24 in aktivierter Stellung, in welcher der Becherrand des becherförmigen Körpers 25 den Außenrand des Kaschiermaterials 12 auf die Rückseite des Formteils 10 presst.

### Bezugszeichenliste

- 10: Formteil
- 11: Lochrand
- 12: Kaschiermaterial
- 13: Kolben-/Zylinderanordnung
- 14: Zylinder
- 15: Kolben
- 16: O-Ring
- 17: Übergangsbereich
- 18: Endabschnitt
- 19: Rückhalteeinrichtung
- 20: becherförmiger Körper
- 21: Betätigungsstange
- 22: Längsmittenanordnung
- 23: Stirnrandfläche
- 24: Niederdrückeinrichtung
- 25: becherförmiger Körper
- 26: Betätigungsstange
- 27: Ausnehmung

## Patentansprüche

1. Vorrichtung zum Umbugen von Rändern, insbesondere von Lochrändern in einem Formteil, z. B. einem Armaturenbrett oder einer Türverkleidung mit Kaschiermaterial, **gekennzeichnet durch**
einen Zylinder (14), dessen Innendurchmesser dem Durchmesser des umzubugenden Rands (11) zuzüglich der Dicke des Kaschiermaterials (12) entspricht, und der eine Stirnrandfläche (23) zum Pressen des Kaschiermaterials (12) an den sich an den Rand (11) anschließenden Bereich des Formteils (10) aufweist,
einen Kolben (15), der im Zylinder (14) mit einem Ende über dessen Stirnrandfläche (23) hinaus beweglich geführt ist, das unter Festlegung eines axialen Übergangsbereichs (17) einen Durchmesser aufweist, der kleiner als der Zylinder-Innendurchmesser ist,
einen O-Ring (16) aus elastischem Material, der auf dem Kolben-Übergangsbereich (17) sitzt und eine Dicke entsprechend der Differenz zwischen dem Durchmesser des Übergangsbereichs (17) und dem Zylinder-Innendurchmesser aufweist, und
eine Rückhalteeinrichtung (19) für den O-Ring (16) zum axialen Festsetzen des O-Rings (16) am Kolben-Übergangsbereich (17) und zum axialen Pressen des O-Rings (16) gegen den Übergangsbereich (17).

2. Vorrichtung nach Anspruch 1, **dadurch gekennzeichnet, dass** der Kolben-Obergangsbereich (17) eine radiale Ringstufenfläche ist.

3. Vorrichtung nach Anspruch 1, **dadurch gekennzeichnet, dass** der Kolben (15) über eine Konusmantelfläche in den kleineren Durchmesser an seinem Ende übergeht, und dass der O-Ring (16) durch die Rückhalteeinrichtung (19) an der Stelle axial am Kolben (15) festgesetzt ist, an welcher die Konusmantelfläche in die Zylindermantelfläche (18) kleineren Durchmessers übergeht.

4. Vorrichtung nach Anspruch 3, **dadurch gekennzeichnet, dass** die Konusmantelfläche eine axiale Erstreckung derart aufweist, dass der sich einwärts anschließende Kolbenbereich mit dem Nenn-Innendurchmesser dann auf Höhe des Rands (11) zu liegen kommt, wenn der O-Ring (16) durch axialen Hub des Kolbens (15) aus dem Rand (11) austritt.

5. Vorrichtung nach einem der Ansprüche 1 bis 4, **dadurch gekennzeichnet, dass** die Rückhalteeinrichtung (19) eine Betätigungsstange (21) aufweist, die in einer axialen Bohrung des Kolbens (15) geführt ist.

6. Vorrichtung nach Anspruch 5, **dadurch gekennzeichnet, dass** die Rückhalteeinrichtung (19) in Gestalt eines Bechers (20) gebildet ist, in dessen Boden die Betätigungsstange (21) verankert ist, und dessen Rand in Eingriff mit dem O-Ring (16) steht.

7. Vorrichtung nach einem der Ansprüche 1 bis 6, **dadurch gekennzeichnet, dass** eine Niederdrückeinrichtung (24) für über den Rand (11) vorstehendes Kaschiermaterial vorgesehen ist, die an diesem radial außerhalb des O-Rings (16) angreift.

8. Vorrichtung nach Anspruch 7 in Verbindung mit Anspruch 6, **dadurch gekennzeichnet, dass** die Niederdrückeinrichtung (24) in Gestalt eines Bechers (25) gebildet ist, der die becherförmige Rückhalteeinrichtung (19) übergreift.

9. Verfahren zum Umbugen von Lochrändern in einem plattenförmigen Gegenstand, z. B. einem Armaturenbrett oder einer Türverkleidung mit einem Kaschiermaterial unter Verwendung der Vorrichtung nach einem der Ansprüche 1 bis 8, **gekennzeichnet durch** die Schritte:
a) Bereitstellen der Anordnung aus Kolben, Zylinder, O-Ring und den O-Ring am Kolben-Übergangsbereich festsetzender Rückhalteeinreichung, wobei der Kolben so weit in den Zylinder eingefahren wird, dass der O-Ring in diesem zu liegen kommt,
b) Anlegen der Stirnrandfläche des Zylinders an der mit Kaschiermaterial kaschierten Seite des umzubugenden Rands, über welchen das an dieser Stelle durchbrochene Kaschiermaterial vorsteht,
c) Ausfahren des Kolbens, bis die Unterseite des O-Rings auf Höhe des Zylinder-Stirnflächenrands zu liegen kommt,
d) Verschieben der Rückhalteeinrichtung entgegen der Kolbenausfahrrichtung unter axialer Verpressung des O-Rings, und
e) Ausfahren des Kolbens unter Entspannung des O-Rings in radialer Richtung unter Umlegen des Kaschiermaterials auf die Rückseite des Rands.

10. Verfahren nach Anspruch 9 in Verbindung mit Anspruch 3, **dadurch gekennzeichnet, dass** im Schritt e) die Rückhalteeinrichtung nach Entspannung des O-Rings stationär gehalten wird , während der Kolben unter radialem Aufweiten des über die Konusmantelfläche ablaufenden O-Rings weiter ausgefahren wird.

11. Verfahren nach Anspruch 9 oder 10 in Verbindung mit Anspruch 7 oder 8, **dadurch gekennzeichnet, dass** der Außenrand des den Rand durchsetzenden und vom O-Ring umgelegten Kaschiermaterials zur Fixierung, z.B. Klebeverbindung mittels der Niederdrückeinrichtung auf die Rückseite des Lochrands gepresst wird.

## Claims

1. Device for folding edges, in particular hole edges in a moulded part, e.g. a dashboard or a door lining, with laminating material, **characterized by**
a cylinder (14), the inside diameter of which corresponds to the diameter of the edge (11) to be folded plus the thickness of the laminating material (12) and which has an end face (23) for pressing the laminating material (12) onto that region of the moulded part (10) which adjoins the edge (11),
a piston (15) which is guided in the cylinder (14) in such a way that it can be moved with one end beyond the end face (23) of the cylinder (14), this end, with an axial transition region (17) being established, having a diameter which is smaller than the cylinder inside diameter,
an O-ring (16) of elastic material which sits on the piston transition region (17) and has a thickness corresponding to the difference between the diameter of the transition region (17) and the cylinder inside diameter, and
a retaining device (19) for the O-ring (16) for axially securing the O-ring (16) on the piston transition region (17) and for axially pressing the O-ring (16) against the transition region (17).

2. Device according to Claim 1, **characterized in that** the piston transition region (17) has a radial annular step surface.

3. Device according to Claim 1, **characterized in that** the piston (15) merges into the smaller diameter at its end via a conical lateral surface, and **in that** the O-ring (16) is secured axially on the piston (15) by the retaining device (19) at the location at which the conical lateral surface merges into the cylinder lateral surface (18) of smaller diameter.

4. Device according to Claim 3, **characterized in that** the conical lateral surface has such an axial extent that the inwardly adjoining piston region having the nominal inside diameter comes to lie at the level of the edge (11) when the O-ring (16) emerges from the edge (11) due to the axial stroke of the piston (15).

5. Device according to one of Claims 1 to 4, **characterized in that** the retaining device (19) has an actuating rod (21) which is guided in an axial bore of the piston (15).

6. Device according to Claim 5, **characterized in that** the retaining device (19) is formed in the shape of a cup (20), in the bottom of which the actuating rod (21) is anchored, and the edge of which is in engagement with the O-ring (16).

7. Device according to one of Claims 1 to 6, **characterized in that** a pressing-down device (24) is provided for laminating material projecting beyond the edge (11) and acts on this laminating material radially outside the O-ring (16).

8. Device according to Claim 7 in combination with Claim 6, **characterized in that** the pressing-down device (24) is formed in the shape of a cup (25) which overlaps the cup-shaped retaining device (19).

9. Method of folding hole edges in a plate-shaped article, e.g. a dashboard or a door lining, with a laminating material using the device according to one of Claims 1 to 8, **characterized by** the steps:
a) providing the arrangement of piston, cylinder, O-ring and retaining device securing the O-ring on the piston transition region, the piston being retracted into the cylinder to such an extent that the O-ring comes to lie in the latter,
b) placing the end face of the cylinder against that side of the edge to be folded which is laminated with laminating material, beyond which edge the laminating material pierced at this point projects,
c) extending the piston until the underside of the O-ring comes to lie at the level of the cylinder end face,
d) displacing the retaining device against the piston extension direction with the O-ring being pressed axially, and
e) extending the piston, with the O-ring relaxing in the radial direction, while the laminating material is bent over onto the rear side of the edge.

10. Method according to Claim 9 in combination with Claim 3, **characterized in that**, in step e), the retaining device, after relaxation of the O-ring, is held stationary, while the piston is extended further, with the O-ring, running down over the conical lateral surface, being expanded radially.

11. Method according to Claim 9 or 10 in combination with Claim 7 or 8, **characterized in that** the outer edge of the laminating material passing through the edge and bent over by the O-ring is pressed onto the rear side of the hole edge by means of the pressing-down device for the fixing, e.g. the adhesive connection.

## Revendications

1. Dispositif pour retourner des bords, en particulier des bords de trous dans une pièce moulée, par exemple, un tableau de bord ou une garniture de porte munie d'une matière de revêtement, **caractérisé par**
un cylindre (14) dont le diamètre intérieur correspond au diamètre du bord (11) à retourner augmenté de l'épaisseur de la matière de revêtement (12), et qui présente une surface de bord frontale (23) destinée à presser la matière de revêtement (12) contre la zone de la pièce moulée (10) qui est adjacente au bord (11),
un piston (15) qui est guidé mobile dans le cylindre (14) pour émerger au-delà de la surface de bord frontale (23) de ce dernier par une extrémité qui présente un diamètre qui est plus petit que le diamètre intérieur du cylindre, avec formation d'une zone de transition axiale (17),
une bague torique (16) en matière élastique qui repose sur la zone de transition (17) du piston et présente une épaisseur correspondant à la différence entre le diamètre de la zone de transition (17) et le diamètre intérieur du cylindre, et
un dispositif de retenue (19) pour la bague torique (16), qui sert à arrêter axialement la bague torique (16) au niveau de la zone de transition (17) du piston, et à presser axialement la bague torique (16) contre la zone de transition (17).

2. Dispositif selon la revendication 1, **caractérisé en ce que** la zone de transition (17) du piston est une surface d'épaulement annulaire radiale.

3. Dispositif selon la revendication 1, **caractérisé en ce que** le piston (15) se raccorde au petit diamètre à son extrémité par une surface de paroi conique et **en ce que** la bague torique (16) est arrêtée axialement sur le piston (15) par le dispositif de retenue (19) à l'endroit où la surface de paroi conique se raccorde à la surface de paroi cylindrique (18) de plus petit diamètre.

4. Dispositif selon la revendication 3, **caractérisé en ce que** la surface de paroi conique présente une extension axiale telle que la zone du piston qui y fait suite vers l'intérieur et qui possède le diamètre intérieur nominal vienne se placer à la hauteur du bord (11) lorsque la bague torique (16) sort du bord (11) sous l'effet d'une levée axiale du piston (15).

5. Dispositif selon une des revendications 1 à 4, **caractérisé en ce que** le dispositif de retenue (19) présente une tige d'actionnement (21) qui est guidée dans un perçage axial du piston (15).

6. Dispositif selon la revendication 5, **caractérisé en ce que** le dispositif de retenue (19) a la forme d'un godet (20) dans le fond duquel la tige d'actionnement (21) est ancrée et dont le bord est en prise avec la bague torique (16).

7. Dispositif selon une des revendications 1 à 6, **caractérisé en ce qu'**il est prévu un dispositif presseur (24) pour la matière de revêtement qui déborde au-delà du bord (11), dispositif qui attaque cette matière dans une position radialement extérieure à la bague torique (16).

8. Dispositif selon la revendication 7 en combinaison avec la revendication 6, **caractérisé en ce que** le dispositif presseur (24) a la forme d'un godet (25) qui emboîte le dispositif de retenue en forme de godet (19).

9. Procédé pour retourner des bords de trous dans un objet en forme de plaque, par exemple, un tableau de bord ou une garniture de porte, muni d'une matière de revêtement, en utilisant le dispositif selon une des revendications 1 à 8, **caractérisé par** les étapes consistant à :
a) préparer l'ensemble composé du piston, du cylindre, de la bague torique et du dispositif de retenue qui arrête la bague torique au niveau de la zone de transition du piston, le piston étant rentré suffisamment loin dans le cylindre pour que la bague torique vienne reposer sur lui,
b) appliquer la surface de bord frontal du cylindre contre le côté du bord à retourner qui est revêtu de la matière de revêtement, au-delà duquel la matière de revêtement qui est percée à cet endroit déborde,
c) mettre le piston en extension jusqu'à ce que la face inférieure de la bague torique vienne se placer au niveau du bord de la surface frontale du cylindre,
d) déplacer le dispositif de retenue en sens inverse de la direction de sortie du piston, avec compression axiale de la bague torique, et
e) mettre le piston en extension, avec détente de la bague torique dans la direction radiale, et avec retournement de la matière de revêtement sur la face arrière du bord.

10. Procédé selon la revendication 9, en combinaison avec la revendication 3, **caractérisé en ce que**, dans l'étape e), le dispositif de retenue est maintenu en position fixe après la détente de la bague torique, tandis que le piston est mis plus fortement en extension, avec élargissement radial de la bague torique qui glisse sur la surface de paroi conique.

11. Procédé selon la revendication 9 ou 10, en combinaison avec la revendication 7 ou 8, **caractérisé en ce que** le bord extérieur de la matière de revêtement qui traverse le bord et qui est retourné par la bague torique, est pressé sur la face arrière du bord du trou pour l'exécution de la fixation, par exemple, l'assemblage collé, au moyen du dispositif presseur.
